# EUROPÄISCHE PATENTSCHRIFT

(11) **EP 0 910 513 B1**
(45) Veröffentlichungstag und Bekanntmachung des Hinweises auf die Patenterteilung: **21.03.2001**
(21) Anmeldenummer: 97929317.2
(22) Anmeldetag: 02.07.1997
(51) Int. Cl.: B60G 17/015

(54) **NIVEAUGEREGELTES LUFTGEFEDERTES ACHSAGGREGAT, Z.B. FÜR GROSSRAUM-PERSONENKRAFTWAGEN**
GROUND CLEARANCE-REGULATED, AIR-SUSPENDED AXLE AGGREGATE, FOR EXAMPLE FOR MONOSPACE PRIVATE CARS
GROUPE ESSIEU A SUSPENSION PNEUMATIQUE ET A REGULATION DE GARDE AU SOL, PAR EXEMPLE POUR VOITURES PARTICULIERES DE TYPE MONOSPACE

(30) Priorität: 11.07.1996 DE 19627894
(43) Veröffentlichungstag der Anmeldung: 28.04.1999
(73) Patentinhaber: DaimlerChrysler AG, 70567 Stuttgart (DE)
(72) Erfinder: CHARZINSKI, Uwe, D-70378 Stuttgart (DE); HORWATH, Jochen, D-72669 Unterensingen (DE); MÜLLER, Hartwig, D-70190 Stuttgart (DE); RICKLEFS, Gerald, D-71394 Kernen (DE); SCHEURER, Friedrich, D-73760 Ostfildern (DE)
(86) Internationale Anmeldenummer: EP9703483
(87) Internationale Veröffentlichungsnummer: WO9802321

(56) Entgegenhaltungen:
- EP-A- 0 397 181
- EP-A- 0 398 158
- PATENT ABSTRACTS OF JAPAN vol. 011, no. 001 (M-550), 6.Januar 1987 & JP 61 181711 A (KAYABA IND CO LTD), 14.August 1986,
- PATENT ABSTRACTS OF JAPAN vol. 096, no. 009, 30.September 1996 & JP 08 127215 A (MITSUBISHI MOTORS CORP), 21.Mai 1996,
- PATENT ABSTRACTS OF JAPAN vol. 009, no. 164 (M-395), 10.Juli 1985 & JP 60 038222 A (SHIYOUWA SEISAKUSHO:KK), 27.Februar 1985,

## Beschreibung

Die Erfindung betrifft ein niveaugeregeltes luftgefedertes Achsaggregat eines Fahrzeuges, insbesondere eines nicht spurgebundenen Fahrzeuges, wie z.B. Großraum-Personenkraftwagen, mit für jede Fahrzeugseite gesonderten steuerbaren Luftfederaggregaten, z.B. Luftfederbälgen, welche über eine Steuerventilanordnung separat mit einem Kompressor bzw. einem Ablaß zur Atmosphäre verbindbar sind, und mit für jede Fahrzeugseite gesonderten Gebern zur Niveauerfassung eines Fahrzeugaufbaus bzw. zur Erfassung eines Abstandes zwischen einem aufbauseitigen Teil und einem Radträger des Achsaggregates.

Bei Fahrzeugen mit Luftfederung wurde schon vorgeschlagen, einen Druckluftspeicher vorzusehen, welcher mittels eines Kompressors ständig auf einem Ladedruck gehalten wird, der oberhalb des Betriebsdruckes in den Luftfederaggregaten liegt. Bei einer gegebenenfalls notwendig werdenden beidseitigen Niveauanhebung des Fahrzeugaufbaus werden zunächst die Luftfederaggregate beider Fahrzeugseiten mit dem Druckspeicher verbunden. Sobald dann auf einer Fahrzeugseite das gewünschte Niveau zumindest annähernd erreicht ist, wird die Verbindung zwischen dem Luftfederaggregat dieser Fahrzeugseite und dem Druckspeicher unterbrochen, während das Luftfederaggregat auf der anderen Fahrzeugseite noch weiterhin mit dem Druckspeicher verbunden bleibt, bis auch dort das gewünschte Niveau zumindest annähernd erreicht wird. Auf diese Weise kann ein Fahrzeug auch bei ungleicher Belastung der Fahrzeugseiten mit seiner Fahrzeugquerachse parallel zur Fahrbahn bzw. zum Untergrund gebracht werden. Die Belastungsunterschiede zwischen den Fahrzeugseiten werden durch entsprechende Druckunterschiede zwischen den Luftfederaggregaten kompensiert.

Bei einer gegebenenfalls notwendig werdenden beidseitigen Niveauabsenkung können die Luftfederaggregate beider Fahrzeugseiten über jedem Luftfederaggregat gesondert zugeordnete Ablaßventile zunächst simultan entlüftet werden, bis wiederum auf einer Seite das gewünschte Niveau zumindest annähernd erreicht wird. Nachfolgend wird dann nur noch das Luftfederaggregat auf der Fahrzeugseite mit zu hohem Niveau weiter entlüftet.

Aus der DE 36 44 942 C2 ist ein hydropneumatisches Federungssystem für Fahrzeug bekannt, bei denen Fahrzeugteile auch außerhalb des Regelbereiches einer Niveauregelanlage abgesenkt bzw. angehoben werden können. Um bei solchen extremen Hubbzw. Absenkbewegungen des Fahrzeugaufbaus nur einen vergleichsweise geringen Steueraufwand notwendig zu machen, ist nach dieser Druckschrift vorgesehen, einen Gleichlauf der an der Hub- bzw. Absenkbewegung teilnehmenden Abstützaggregate dadurch zu erreichen, daß diese Abstützaggregate in vorgegebener Reihenfolge nacheinander einzeln jeweils kurzzeitig betätigt werden, d.h. dem Hydraulikzylinder des jeweiligen hydropneumatischen Abstützaggregates wird kurzzeitig zusätzliches Hydraulikmedium zugeführt, wenn das Fahrzeug der Fahrzeugteil angehoben werden soll. Falls eine Absenkbewegung durchgeführt werden muß, wird den Hydraulikzylindern der Abstützaggregate nacheinander kurzzeitig Hydraulikmedium entnommen. Hier wird die Tatsache ausgenutzt, daß die Kompressibilität hydraulischer Medien außerordentlich gering ist. Wenn also den Hydraulikzylindern der hydropneumatischen Abstützaggregate nacheinander kurzzeitig Hydraulikmedium zugeführt oder aus den Hydraulikzylindern nacheinander kurzzeitig Hydraulikmedium abgeführt wird, so kann durch eine einfache Zeit- oder Mengenerfassung gewährleistet werden, daß alle Hydraulikzylinder im zeitlichen Mittel die gleiche Hubverstellung ausführen und eine Kippbewegung des Fahrzeuges im Verlauf der Hub- oder Absenkbewegung vermieden wird.

Aufgabe der Erfindung ist es nun, bei einer pneumatischen Federung den steuer- oder regeltechnischen Aufwand möglichst zu verringern, gleichwohl einen hohen Komfort zu ermöglichen.

Hierzu ist erfindungsgemäß vorgesehen, daß eine beidseitige Niveauveränderung schrittweise und in ständigem Wechsel zwischen den Fahrzeugseiten erfolgt, indem eine der Steuerventilanordnung zugeordnete Regel- bzw. Steuereinheit das Luftfederaggregat der einen Fahrzeugseite und das Luftfederaggregat der anderen Fahrzeugseite bei einer beidseitigen Niveauanhegung alternierend zur Ausführung aufeinanderfolgender geringer bzw. begrenzter Hebebewegungen direkt mit dem Kompressor und bei einer beidseitigen Niveauabsenkung alternierend zur Ausführung aufeinanderfolgender geringer bzw. begrenzter Absenkbewegungen mit der Atmosphäre verbindet, wobei bei der jeweiligen Hebe- bzw. Absenkbewegung am jeweils aktiven Luftfederaggregat ein Niveau eingestellt wird, welches um ein geringes Maß höher bzw. tiefer liegt als das Niveau am entsprechenden Luftfederaggregat auf der jeweils anderen Fahrzeugseite.

Die Erfindung beruht auf dem allgemeinen Gedanken, in der Regel eine simultane Verstellung der Federaggregate auf beiden Fahrzeugseiten einer Achse zu vermeiden und Niveauänderungen jeweils schrittweise und im ständigen Wechsel zwischen den Fahrzeugseiten durchzuführen. Dadurch wird bei starken Belastungsunterschieden zwischen den Fahrzeugseiten und entsprechenden Differenzen zwischen den Abstützkräften bzw. den Pneumatikdrücken der Federaggregate ein Last- oder Druckausgleich zwischen den Aggregaten sowie eine damit gegebenenfalls einhergehende ausgeprägte Wankbewegung des Fahrzeugaufbaus relativ zur Fahrzeuglängsachse vermieden. Gleichzeitig wird die Steuerung bzw. Regelung des Niveaus vereinfacht, weil die genannten Differenzen keine nennenswerten Einflüsse auf die Bewegungen des Fahrzeugaufbaus bei einer Niveauanhebung bzw. -absenkung ausüben können.

Außerdem kann bei pneumatischen Federungssystemen ein besonders einfacher Aufbau ohne pneumatischen Druckspeicher gewährleistet werden.

Die bezüglich der Fahrzeugseiten alternierend erfolgenden Hebe- bzw. Absenkbewegungen sind bei entsprechend kleinen Hebebzw. Absenkschritten für die Fahrzeuginsassen nicht unterscheidbar, d.h. das Fahrzeug wird vermeintlich auf beiden Fahrzeugseiten gleichförmig angehoben bzw. abgesenkt. Dieser Effekt beruht auch darauf, daß eine Druckluftzuführung bzw. eine Entlüftung eines Luftfederaggregates auf einer Fahrzeugseite jeweils zu entsprechenden Niveauänderungen auf beiden Fahrzeugseiten führt, weil die Wankneigung eines Fahrzeuges typischerweise durch zumindest einen Stabilisator zwischen Fahrzeugrädern bzw. Radträgern unterschiedlicher Fahrzeugseiten begrenzt wird.

Im übrigen wirkt bei einem zwei- bzw. mehrachsigen Fahrzeug auch die Abstützung des Fahrzeugaufbaus auf der anderen Achse bzw. den anderen Achsen einer Wankbewegung entgegen. Dieser Effekt ist besonders ausgeprägt, falls die Radträger des Achsaggregates über eine Starrachse bzw. eine starrachsähnliche Kopplung miteinander verbunden sind. Denn in diesem Falle wird eine beidseitige gleichgerichtet Niveauänderung bei der Verstellung eines Luftfederaggregates auch dadurch wirksam unterstützt, daß die Luftfederaggregate gegenüber den Radträgern des Achsaggregates in Fahrzeugquerrichtung regelmäßig mehr oder weniger weit zur Fahrzeuglängsmitte hin versetzt angeordnet sind.

Wenn gemäß einer bevorzugten Ausführungsform der Erfindung ein größerer Versatz vorgesehen ist, wird die alternierende Ansteuerung der Luftfederaggregate auf den beiden Fahrzeugseiten besonders wenig erkennbar.

In vorteilhafter Ausgestaltung der Erfindung sind den zur Niveauerfassung dienenden Gebern ausgangsseitig Signalfilter zugeordnet, welche beim Fahrbetrieb Langzeitmittelwerte der Gebersignale und bei stehendem Fahrzeug Kurzzeitmittelwerte der Gebersignale bzw. ungefilterte Gebersignale an die Regelbzw. Steuereinheit weiterleiten. Damit wird der Tatsache Rechnung getragen, daß beim Fahrbetrieb auftretende Federhübe regelmäßig nicht mit einer bleibenden Niveauänderung verbunden sind und Niveauänderungen nicht bzw. nur aufgrund von Undichtigkeiten des Pneumatiksystems und damit vergleichsweise langsam auftreten können. Dagegen muß im Stand mit einer Bebzw. Entladung des Fahrzeuges bzw. mit einem Zu- oder Ausstieg von Personen und dementsprechend mit starken Beladungsänderungen gerechnet werden.

Außerdem kann in vorteilhafter Weise vorgesehen sein, bei stehendem Fahrzeug wegabhängig gesteuerte Niveauänderungen und bei fahrendem Fahrzeug vornehmlich zeitgesteuerte Niveauänderungen vorzunehmen. Dazu kann bei Fahrbetrieb bei einer notwendigen Niveauänderung ein Luftfederaggregat jeweils für eine vorgegebene Zeitspanne, von beispielsweise fünf Sekunden, mit dem Kompressor bzw. dem Ablaß verbunden und danach für eine vorgegebene längere Zeitspanne, die der zeitlichen Mittelwertbildung der Signalfilter angepaßt ist, gegenüber dem Kompressor und dem Ablaß abgesperrt werden. Bei stehendem Fahrzeug erfolgt dagegen eine Niveauänderung, die allein in Abhängigkeit von den Gebersignalen gesteuert wird.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen und Merkmale beschrieben werden.

Dabei zeigt
- Fig. 1: eine schematisierte Draufsicht auf ein Kraftfahrzeug mit einem luftgefederten Hinterachsaggregat entsprechend der Erfindung,
- Fig. 2: eine schematisierte Ansicht des Achsaggregates in Fahrzeuglängsrichtung,
- Fig. 3: verschiedene Diagramme zur Erläuterung der Steuerung einer Niveauanhebung und
- Fig. 4: verschiedene Diagramme zur Erläuterung der Steuerung einer Niveauabsenkung.

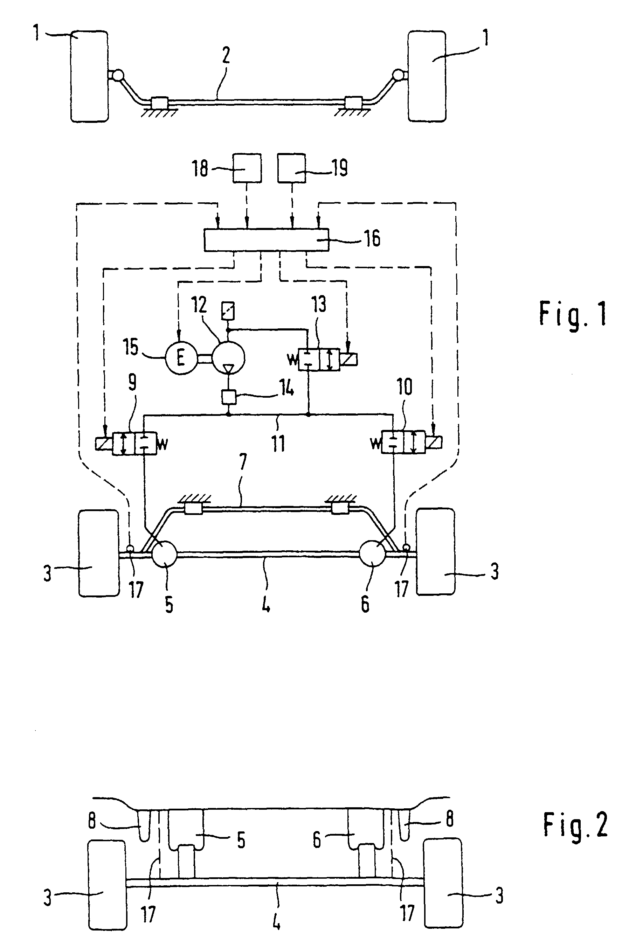

Das im übrigen nicht näher dargestellte Kraftfahrzeug besitzt gemäß Fig. 1 eine Vorderachse mit angetriebenen Vorderrädern 1 (Fahrzeugmotor und Antriebswellen nicht dargestellt), welche miteinander in grundsätzlich bekannter Weise durch einen Stabilisator 2 zur Verminderung von Wankbewegungen des Fahrzeugaufbaus, insbesondere bei Kurvenfahrt, gekoppelt sind. Die Federung der Vorderräder 1 erfolgt über nicht dargestellte passive Federaggregate, beispielsweise solche mit Schrauben- oder Torsionsstabfedern.

Des weiteren besitzt das beispielhaft dargestellte Fahrzeug ein Hinterachsaggregat mit antriebslosen Hinterrädern 3, die an einer Starrachse 4 angeordnet und mittels grundsätzlich bekannter, zwischen dem Fahrzeugaufbau bzw. aufbauseitigen Teilen des Hinterachsaggregates und der Starrachse 4 angeordneter Luftfederaggregate 5 und 6 federbar abgestützt sind. Im übrigen sind die Hinterräder 3 zur Verminderung der Wankneigung des Fahrzeugaufbaus über einen weiteren Stabilisator 7 miteinander gekoppelt. Die Starrachse 4 ist lediglich beispielhaft. Die Erfindung ist in keiner Weise auf bestimmte Achskonstruktionen beschränkt. Dementsprechend könnte das Fahrzeug auch ein Hinterachsaggregat mit Einzelradaufhängung, z.B. an Schäglenkern, aufweisen.

Neben bzw. in den Luftfederaggregaten 5 und 6, die in üblicher Weise als Luftfederbälge ausgebildet sein können, sind lediglich in Fig. 2 dargestellte elastische Anschläge 8 angeordnet, welche beispielsweise aus Gummi oder einem sonstigen Elastomermaterial bestehen und abstützwirksam werden, wenn starke Einfederhübe der Achse 4 auftreten oder der Vertikalabstand zwischen Achse 4 und Fahrzeugaufbau aus sonstigen Gründen stark verringert wird.

Die Luftfederaggregate 5 und 6 sind jeweils über ein normal geschlossenes Absperrventil 9 bzw. 10 an eine Verbindungsleitung 11 angeschlossen, die ihrerseits mit der Druckseite eines Kompressors 12 sowie einem normal geschlossenen Ablaßventil 13 verbunden ist. Das Ablaßventil 13 ist nach Art eines Bypaßventiles parallel zum Kompressor 12 angeordnet. Um das Luftfedersystem frei von Kondenzwasser zu halten, ist ein Lufttrockner 14 vorgesehen, der druckseitig des Kompressors 12 angeordnet sein kann. Saugseitig des Kompressors 12 kann ein Saugfilter angeordnet sein.

Die zur Betätigung der Ventile 9,10 und 13 dienenden elektromagnetischen Stellorgane sowie ein zum Antrieb des Kompressors 12 dienender Elektromotor 15 werden mittels einer elektronischen Steuer- und Regeleinheit 16 ein- und ausgeschaltet, welche eingangsseitig mit Weggebern 17 verbunden ist, die zwischen der Achse 4 und dem Fahrzeugaufbau bzw. aufbauseitigen Teilen angeordnet sind und zur Erfassung der Abstände zwischen der Achse 4 und dem Fahrzeugaufbau bzw. aufbauseitigen Teilen dienen.

Außerdem ist die Steuer- bzw. Regeleinheit 16 eingangsseitig mit einem Signalgeber 18, beispielsweise einem Tachometer, verbunden, dessen Signale erkennen lassen, ob das Fahrzeug steht oder fährt. Über manuell betätigbare Sollwertgeber 19, die am Fahrerplatz und/oder an einer Fahrzeugtür, insbesondere einer Hecktür oder Heckklappe, angeordnet sind, erhält die Steuer- bzw. Regeleinheit 16 Vorgaben für das jeweils an den Hinterrädern 3 einzustellende Niveau des Fahrzeugaufbaus, d.h. für die Abstände zwischen Achse 4 und Fahrzeugaufbau. Falls die Sollwertgeber 19 nicht vorhanden sind bzw. keine Signale erzeugen, sucht die Steuer- bzw. Regeleinheit 16 jeweils fest oder parameterabhängig vorgegebene Niveaus einzustellen, wobei zur Erfassung der jeweils zu berücksichtigenden Parameter entsprechende Sensoren (nicht dargestellt) mit zugeordneten Eingängen der Steuer- bzw. Regeleinheit 16 verbunden sind.

Anhand der weiteren Figuren werden nun verschiedene Betriebsarten der Niveauregelung an den Hinterrädern 3 erläutert.

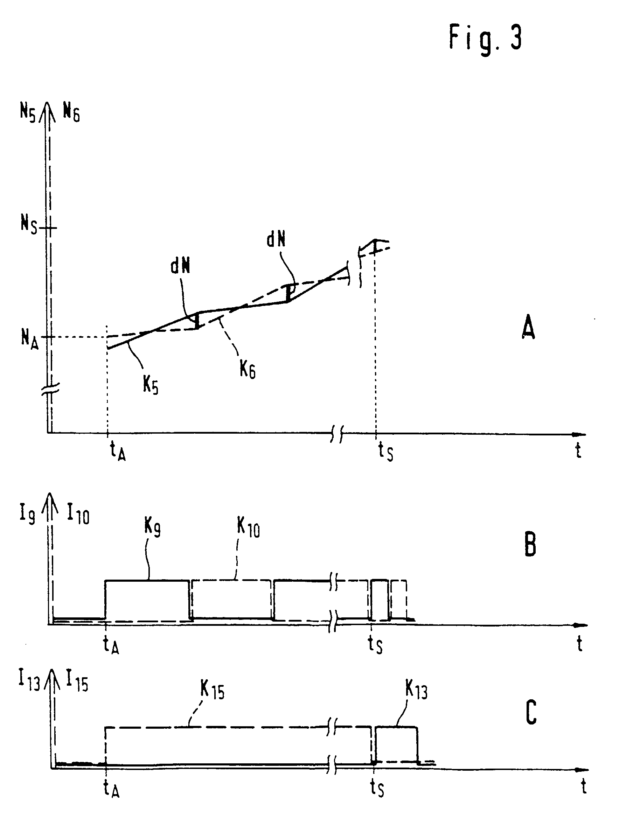

Fig. 3 betrifft den Fall, daß bei stehendem Fahrzeug eine Niveauanhebung vorgenommen werden muß, weil beispielsweise der Sollwertgeber 19 (vgl. Fig. 1) betätigt wurde und ein erhöhtes Sollniveau vorgibt.

Das Diagramm A der Fig. 3 zeigt die Niveaus N₅ und N₆ des Fahrzeugaufbaus an den Luftfederaggregaten 5 und 6 in Abhängigkeit von der Zeit t, wobei die Kurve K₅ die Niveauänderung am Luftfederaggregat 5 und die Kurve K₆ die Niveauänderung am Luftfederaggregat 6 wiedergibt. Das Diagramm B gibt die die Stellmagnete der Absperrventile 9 und 10 beaufschlagenden elektrischen Ströme I₉ und I₁₀ in Abhängigkeit von der Zeit t wieder, wobei die Kurve K₉ die Bestromung am Ventil 9 und die Kurve K₁₀ die Bestromung am Ventil 10 zeigt. Im Diagramm C zeigt die Kurve K₁₅ den zeitlichen Verlauf des elektrischen Stromes I₁₅ für den Elektromotor 15 des Kompressors 12. Die Kurve K₁₃ zeigt den zeitlichen Verlauf des elektrischen Stromes I₁₃ für den Stellmagneten des Ventiles 13.

Zu einem Zeitpunkt t_{A} möge nun für das stehende Fahrzeug ein Niveau N_{S} vorgegeben werden, welches oberhalb des zum Zeitpunkt t_{A} vorliegenden Niveaus N_{A} auf der höheren Fahrzeugseite bzw. auf beiden Fahrzeugseiten liegt.

Dies hat zur Folge, daß zum Zeitpunkt t_{A} der Elektromotor 15 eingeschaltet und das Ventil 9 durch Bestromung seines Stellmagneten geöffnet wird. Damit wird in das Luftfederaggregat 5 auf einer bzw. der tieferen Fahrzeugseite zusätzliche Luft eingeführt, mit der Folge, daß das Niveau N₅ am Luftfederaggregat 5 gemäß der Kurve K₅ entsprechend ansteigt. Gleichzeitig steigt auch das Niveau N₆ am Luftfederaggregat 6 - wenn auch in geringerem Maße - an, weil die Stabilisatoren 2 bzw. 7 (vgl. Fig. 1) einer nur einseitigen Niveauänderung des Fahrzeugaufbaus entgegenwirken und die durch die Luftzufuhr verursachte Hubbewegung des Luftfederaggregates 5 auch aufgrund der Abstützung des Fahrzeugaufbaus auf der den Vorderrädern 1 zugeordneten Federn zu einer mehr oder weniger ausgeprägten Entlastung des Luftfederaggregates 6 führt.

Sobald das Niveau N₅ um einen vorgegebenen kleinen Wert dN oberhalb des Niveaus N₆ liegt, wird der Strom I₉ für den Stellmagneten des Absperrventiles 9 abgeschaltet, so daß das Ventil 9 schließt. Gleichzeitig wird der Stellmagnet des Absperrventiles 10 bestromt, so daß das Absperrventil 10 öffnet. Dementsprechend liefert der vom weiterhin bestromten Elektromotor 15 angetriebene Kompressor 12 Druckluft zum Luftfederaggregat 6, mit der Folge, daß das Niveau N₆ stärker und das Niveau N₅ schwächer ansteigt. Sobald sich das Niveau N₆ um den geringen Wert dN über das Niveau N₅ hinaus erhöht hat, wird das Absperrventil 10 geschlossen, während das Absperrventil 9 erneut geöffnet wird.

Durch wechselseitige Luftzufuhr zu den Luftfederaggregaten 9 und 10 wird somit der Fahrzeugaufbau angehoben.

Wenn die Niveaus N₅ und N₆ zu einem Zeitpunkt t_{S} den Sollwert Nₛ erreichen, wird der Strom I₁₅ für den Elektromotor 15 abgeschaltet, d.h. der Kompressor 12 wird stillgesetzt. Gleichzeitig wird der Stellmagnet des Ablaßventiles 13 zur Öffnung dieses Ventiles mit einem Strom I₁₃ beaufschlagt. Im übrigen werden die Stellmagnete der Absperrventile 9 und 10 kurzzeitig zur Öffnung dieser Ventile bestromt, derart, daß die Luftfederaggregate 5 und 6 jeweils für eine sehr kurze Zeitspanne mit der Atmosphäre verbunden werden. Dadurch kann sichergestellt werden, daß das erreichte Niveau Nₛ nicht nennenswert überschritten werden kann. Denn ohne diese kurzzeitige Öffnung der Ventile 9 und 10 nach Abschluß des Hebevorganges kann ein sogenanntes "Nachkriechen" auftreten, d.h. trotz beendeter Luftzufuhr zu den Luftfederaggregaten 5 und 6 kann sich das erreichte Niveau noch erhöhen. Ursache dafür sind dynamische Effekte und thermodynamische Vorgänge in den Luftleitungen und Luftfederaggregaten sowie Hysterese-Effekte an Lagerteilen. Außerdem bleibt bei den meisten Luftfederaggregaten der wirksame Querschnitt bei Niveauänderungen nicht konstant, d.h. in der Regel vergrößert sich der wirksame Querschnitt mit zunehmendem Niveau. Auch dadurch kann das genannte ,,Nachkriechen" verursacht werden.

Falls die Niveaus N₅ und N₆ anfänglich, beim Start der Niveauanhebung, ungleich sind, wird zunächst dem Luftfederaggregat 5 oder 6 mit dem geringeren Niveau Druckluft zugeführt, bis eine Angleichung der Niveaus N₅ und N₆ aneinander erreicht ist. Danach erfolgt dann der vorangehend erläuterte Hebebetrieb.

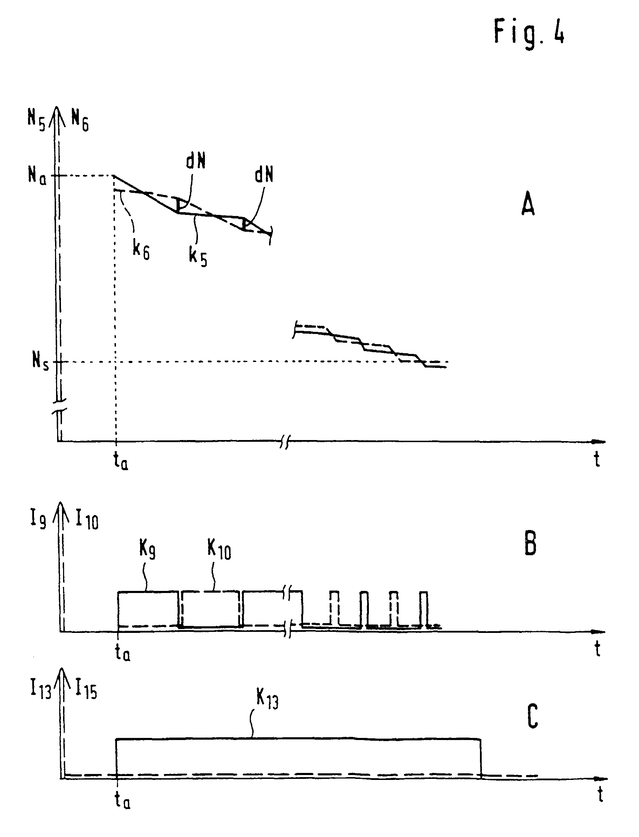

Die Fig. 4 zeigt nun in zur Fig. 3 analoger Darstellung eine Niveauabsenkung bei einem stehenden Fahrzeug, wobei im Diagramm A wiederum der zeitliche Verlauf der Niveaus N₅ und N₆ dargestellt wird. Die Diagramme B und C zeigen die Bestromung der Stellmagnete der Ventile 9,10 und 13.

Der Kompressor 12 und der ihn antreibende Elektromotor 15 bleiben bei einer Niveauabsenkung ausgeschaltet.

Zu einem Zeitpunkt tₐ möge auf beiden Fahrzeugseiten zumindest ein Niveau Nₐ vorhanden sein, und es erfolgt der Befehl, dieses auf den Wert Nₛ abzusenken.

Dies hat zur Folge, daß zum Zeitpunkt tₐ das Ablaßventil 13 durch Bestromung seines Stellmagneten und eines der Absperrventile 9 und 10, im dargestellten Beispiel das Absperrventil 9, durch Bestromung seines Stellmagenten geöffnet werden. Damit sinkt das Niveau N₅ gemäß der Kurve k₅ ab. Gleichzeitig verringert sich auch das Niveau N₆. Sobald das Niveau N₅ um den kleinen Betrag dN unter dem Niveau N₆ liegt, wird der Strom I₉ für den Stellmagneten des Absperrventiles 9 abgeschaltet, d.h. das Ventil 9 schließt. Gleichzeitig wird nun der Stellmagnet des Absperrventiles 10 bestromt, d.h. das Ventil 10 öffnet. Wenn daraufhin das Niveau N₆ verringert wird (wobei auch wiederum das Niveau N; etwas absinkt) und um den Wert dN unter dem Niveau N₅ liegt, wird das Ventil 10 durch Abschalten des Stromes I₁₀ abgesperrt, und das Ventil 9 wird erneut geöffnet usw.

Sobald eines der Niveaus N₅ bzw. N₆ - im vorliegenden Beispiel das Niveau N₅ - einen Wert erreicht bzw. unterschritten hat, welcher um ein vorgegebenes geringes Maß oberhalb des einzustellenden Niveaus Nₛ liegt, wird der Absenkvorgang verlangsamt, indem die Ventile 9 und 10 jeweils pulsförmig geöffnet und geschlossen werden. Dabei erhält beispielsweise zunächst der Stellmagnet des Absperrventiles 9 nach einer längeren Pause einen Stromimpuls, so daß sich dieses Ventil 9 kurzzeitig öffnet und schließt. Nach einer weiteren Pause wird das Ventil 9 bzw. 10 auf der Fahrzeugseite mit dem höheren Niveau kurz geöffnet usw. In der Regel werden dabei die Ventile 9 und 10 abwechselnd geöffnet, jedoch kann auch ein Ventil mehrmals hintereinander geöffnet werden.

Auf diese Weise wird sichergestellt, daß das gewünschte Niveau Nₛ mit hoher Genauigkeit erreicht werden kann.

Sollten die Niveaus N₅ und N₆ zu Beginn einer Niveauabsenkung ungleich sein, erfolgt zunächst eine Absenkung des jeweils höheren Niveaus, bis ein annähernder Gleichstand erreicht ist.

Bei der vorangehend dargestellten Niveauveränderung bei stehendem Fahrzeug werden die Signale der Weggeber 17 nicht oder nur derart gefiltert, daß jeweils Kurzzeitmittelwerte, d.h. Mittelwerte für eine dem jeweiligen Zeitpunkt unmittelbar vorausgegangene sehr kurze Zeitspanne, gebildet werden.

Bei fahrendem Fahrzeug werden die Signale der Weggeber 17 im Sinne einer Langzeitmittelwertbildung gefiltert, d.h. die Mittelwerte betreffen jeweils Zeitspannen, die sehr groß im Vergleich zur Zeitdauer typischer Federungshübe sind.

Bei der Fahrt des Fahrzeuges werden im übrigen bei einer Niveauänderung die Ventile 9 und 10 - bei laufendem Kompressor 12 und geschlossenem Ablaßventil 13 im Falle einer Niveauanhebung bzw. bei geöffnetem Ablaßventil 13 und stillstehendem Kompressor 12 im Falle einer Niveauabsenkung - auf der jeweils hinsichtlich des Niveaus anzupassenden Fahrzeugseite für vorgegebene Zeitspannen (z.B. 5 sec.) geöffnet, d.h. die Öffnungs- und Schließzeitpunkte der Ventile 9 und 10 werden ausschließlich zeitabhängig und damit unabhängig von der bei geöffnetem Ventil 9 bzw. 10 erfolgten Niveauänderung bestimmt. Nach dem Schließen des jeweiligen Ventiles 9 bzw. 10 wird dann überprüft, ob das jeweils erreichte Niveau innerhalb eines Toleranzbandes liegt. Andernfalls erfolgt eine erneute Korrektur. Bei sehr großen Abweichungen vom Toleranzband können die vorgenannten Zeitspannen verlängert werden (z.B. auf 20 sec.), dies ist, vorzugsweise bei anfahrendem Fahrzeug, dann vorgesehen, wenn das jeweilige Ist-Niveau stark vom Soll-Niveau abweicht.

Um zu vermeiden, daß eine Seitwärtsneigung des Fahrzeugaufbaus bei Kurvenfahrt zu unerwünschten Niveaukorrekturen führt, kann vorgesehen sein, daß Niveaukorrekturen nur dann erfolgen, wenn die Abweichungen vom Sollniveau auf beiden Fahrzeugseiten gleichgerichtet sind.

Grundsätzlich kann jedoch eine Niveauänderung bei fahrendem Fahrzeug in gleicher Weise wie bei stehendem Fahrzeug erfolgen.

Gegebenenfalls kann es erwünscht sein, das Fahrzeug, insbesondere dem Stand, vollständig abzusenken. Dabei erfolgt die Niveauabsenkung zunächst in gleicher Weise, wie es oben anhand der Fig. 4 dargestellt wurde. Sobald einer der Weggeber 17 meldet, daß der zugeordnete Anschlag 8 (vgl. Fig. 2) wirksam geworden ist bzw. bei geringfügiger weiterer Absenkung wirksam werden wird, werden nachfolgend beide Absperrventile 9 und 10 jeweils simultan geöffnet, um eine vollständige Entlüftung der Luftfederaggregate 5 und 6 zu ermöglichen, wie es insbesondere für Inspektionszwecke wichtig ist.

## Patentansprüche

1. Niveaugeregeltes luftgefedertes Achsaggregat (4) eines Fahrzeuges, insbesondere eines nicht spurgebundenen Fahrzeuges, wie z.B. Großraum-Personenkraftwagen, mit für jede Fahrzeugseite gesonderten steuerbaren Luftfederaggregaten (5,6), z.B. Luftfederbälgen, welche über eine Steuerventilanordnung (9,10,13) separat mit einem Kompressor (12) bzw. einem Ablaß zur Atmosphäre verbindbar sind, und mit für jede Fahrzeugseite gesonderten Gebern (17) zur Niveauerfassung eines Fahrzeugaufbaus bzw. zur Erfassung eines Abstandes zwischen einem aufbauseitigen Teil und einem Radträger des Achsaggregates, wobei eine beidseitige Niveauveränderung schrittweise und in ständigem Wechsel zwischen den Fahrzeugseiten erfolgt, indem eine der Steuerventilanordnung (9,10,13) zugeordnete Regel- bzw. Steuereinheit (16) das Luftfederaggregat (5) der einen Fahrzeugseite und das Luftfederaggregat (6) der anderen Fahrzeugseite bei einer beidseitigen Niveauanhebung alternierend zur Ausführung aufeinanderfolgender geringer bzw. begrenzter Hebebewegungen direkt mit dem Kompressor (12) und bei einer beidseitigen Niveauabsenkung alternierend zur Ausführung aufeinanderfolgender geringer bzw. begrenzter Absenkbewegungen mit der Atmosphäre verbindet, wobei bei der jeweiligen Hebebzw. Absenkbewegung am jeweils aktiven Luftfederaggregat (5,6) ein Niveau (N₅,N₆) eingestellt wird, welches um ein geringes Maß (dN) höher bzw. tiefer liegt als das Niveau am entsprechenden Luftfederaggregat auf der jeweils anderen Fahrzeugseite.

2. Achsaggregat nach Anspruch 1,
**dadurch gekennzeichnet,**
daß die Steuereinheit (16) den Kompressor (12) nur bei geöffneter Verbindung mit einem Luftfederaggregat (5,6) einschaltet bzw. eingeschaltet hält.

3. Achsaggregat nach Anspruch 1 oder 2,
**dadurch gekennzeichnet,**
daß die den beiden Fahrzeugseiten zugeordneten Radträger über eine Starrachse (4) bzw. eine starrachsähnliche Kopplung miteinander verbunden sind.

4. Achsaggregat nach einem der Ansprüche 1 bis 3,
**dadurch gekennzeichnet,**
daß die Luftfederaggregate (5,6) bzw. die steuerbaren Federaggregate mit größerem Abstand in Fahrzeugquerrichtung von den Radträgern angeordnet sind.

5. Achsaggregat nach einem der Ansprüche 1 bis 4,
**gekennzeichnet,**
durch einen dem Achsaggregat zugeordneten Stabilisator (7) und/oder eine Kombination mit einem einen Stabilisator (2) aufweisenden weiteren Achsaggregat bzw. einer entsprechenden weiteren Achsanordnung.

6. Achsaggregat nach einem der Ansprüche 1 bis 5,
**dadurch gekennzeichnet,**
daß der Steuereinheit (16) manuell betätigbare Befehls- bzw. Sollwertgeber (19) zugeordnet sind.

7. Achsaggregat nach einem der Ansprüche 1 bis 6,
**dadurch gekennzeichnet,**
daß im Falle einer Niveauanhebung, insbesondere im Stand des Fahrzeuges, bei Erreichen eines gewünschten Niveaus (Nₛ₎) zumindest das zuletzt mit Druckluft beaufschlagte Luftfederaggregat (5,6) kurzzeitig mit der Atmosphäre verbunden wird.

8. Achsaggregat nach einem der Ansprüche 1 bis 7,
**dadurch gekennzeichnet,**
daß bei einer Niveauabsenkung, insbesondere im Stand, kurz vor Erreichen eines gewünschten Niveaus (Nₛ) das jeweilige Luftfederaggregat (5,6) nur impulsweise - durch abwechselndes Öffnen und Schließen eines Absperrventiles (9,10) mit der Atmosphäre verbunden wird.

9. Achsaggregat nach einem der Ansprüche 1 bis 8,
**dadurch gekennzeichnet,**
daß bei fahrendem Fahrzeug eine zeitgesteuerte Niveauanhebung bzw. -absenkung erfolgt, indem ein Luftfederaggregat (5,6) für eine vorgegebene Zeitspanne (5 sec.) ent- bzw. belüftet und sodann überprüft wird, ob das jeweils erreichte Niveau innerhalb eines Toleranzbandes liegt, und daß danach gegebenenfalls weitere zeitgesteuerte Korrekturen erfolgen.

10. Achsaggregat nach einem der Ansprüche 1 bis 9,
**dadurch gekennzeichnet,**
daß bei fahrendem Fahrzeug, insbesondere bei anfahrendem Fahrzeug, eine schnelle Niveauänderung erfolgt; wenn die Abweichung vom gewünschten Niveau groß ist und auf beiden Fahrzeugseiten gleichgerichtete Niveauabweichungen vorliegen.

## Claims

1. Level-adjusted, air-suspension axle unit (4) of a vehicle, in particular a vehicle which does not run on a track, such as for example, large passenger vehicles with separate, controllable air-suspension units (5, 6), air suspension bellows for example, for each side of the vehicle, which can be separately connected, by means of control valve arrangement (9, 10, 13), to a compressor (12) or an outlet to atmospheric pressure, and with separate signal originators (17), for each side of the vehicle, for recording the level of the vehicle body or for recording a gap of separation between a body-side part and a wheel carrier member of the axle unit, whereby changing of level occurs, in stages, on both sides, with continuous changes between the two sides of the vehicle, in that an adjustment or control unit (16), associated with the control valve arrangement (9, 10, 13), alternately directly connects the air-suspension unit (5) of one side of the vehicle then the air-suspension unit (6) of the other side of the vehicle, in alternate lifting of each side of the vehicle, carrying out successive slight or limited raising actions, to the compressor (12), or alternately directly connects the air-suspension unit (5) of one side of the vehicle then the air-suspension unit (6) of the other side of the vehicle, in alternate lowering of each side of the vehicle, carrying out successive slight or limited lowering actions, to the ambient atmospheric air, whereby, in the given raising or lowering movement on the air-suspension unit (5, 6) which is active at the given time, a level (N₅, N₆) is adjusted to which is higher or lower by a slight extent (dN) than the level on the corresponding air-suspension unit on what, at the given time, is the other side of the vehicle.

2. Axle unit in accordance with claim 1,
characterized in that
the control unit (16) only keeps the compressor (12) switched on when there is an open connection to an air-suspension unit (5, 6).

3. Axle unit in accordance with claim 1 or claim 2,
characterized in that
the wheel carrier members, associated with the two sides of the given vehicle, are connected to each other by means of a rigid axle (4) or by coupling which is similar to a rigid axle.

4. Axle unit in accordance with any one of claims 1 to 3,
characterized in that
the air-suspension units (5, 6) or the controllable air-suspension units are disposed with a large separation, in the transverse direction of the vehicle, from the wheel carrier members.

5. Axle unit in accordance with any one of claims 1 to 4,
characterized
by a stabilizer (7) and/or a combination with a further axle unit, having a stabilizer (2), or a combination with a corresponding further axle arrangement.

6. Axle unit in accordance with any one of claims 1 to 5,
characterized in that
manually operable control or required-value setting means are associated with the control unit (16).

7. Axle unit in accordance with any one of claims 1 to 6,
characterized in that
in the case of a lift in level, particularly in a standing position of the vehicle, at least the last air-suspension unit (5, 6) to have compressed air applied to it is briefly connected to the ambient atmospheric air, when a required level (Ns) is reached.

8. Axle unit in accordance with any one of claims 1 to 7,
characterized in that
in the case of lowering of level, particularly in a standing position, just before the required level (N₅) is reached, the given air-suspension unit (5,6) is only connected to the ambient atmospheric air in impulses, through alternating opening and closing of a shut-off valve (9, 10).

9. Axle unit in accordance with any one of claims 1 to 8,
characterized in that
time-based raising and lowering of level takes place in the moving vehicle, through an air-suspension unit (5, 6) having air applied to or evacuated from it for a set period of time, and there is then a check to determine whether or not the given level reached is within a range of permissible divergence, and in that, where required, further time-based correction then occurs.

10. Axle unit in accordance with any one of claims 1 to 9,
characterized in that
in the moving vehicle, especially when the given vehicle is starting up, a quick change in level occurs, if the divergence from the desired level is large and divergences in level, in the same direction, are present on both sides of the vehicle.

## Revendications

1. Groupe d'essieu (4) à suspension pneumatique, à régulation de niveau, d'un véhicule, en particulier d'un véhicule non lié à une voie, tel que, par exemple, une voiture particulière de gros volume, avec des groupes formant ressorts pneumatiques (5, 6) susceptibles d'être commandés, séparés pour chaque côté de véhicule, par exemple des soufflets formant ressort pneumatique, susceptibles d'être reliés, par un dispositif à soupapes de commande (9, 10, 13), séparément, à un compresseur (12) ou à un échappement à l'atmosphère, et avec, pour chaque côté de véhicule, des capteurs (17) séparés pour la détection de niveau de la carrosserie du véhicule ou pour la détection de l'espacement entre une partie, située côté carrosserie, et un support de roue du groupe d'essieu, une modification de niveau, se faisant des deux côtés, s'effectuant par pas et en alternance permanente entre les côtés de véhicule, en ce qu'une unité de régulation ou de commande (16), associée au dispositif à soupapes de commande (9, 10, 10), relie directement au compresseur (12) le groupe formant ressort pneumatique (5) situé d'un côté de véhicule et le groupe formant ressort de pneumatiques (6) situé de l'autre côté de véhicule, en cas d'augmentation de niveau sur les deux - côtés, de façon alternée pour effectuer des mouvements de levage successifs, faibles ou limités, et relie à l'atmosphère en cas de diminution de niveau sur les deux côtés, de façon alternée, pour effectuer des mouvements successifs d'abaissement de faible valeur ou limitée, où, lors du mouvement respectif de levée ou d'abaissement, sur chaque groupe formant ressort pneumatique (5, 6) actif est réglé un niveau (N₅, N₆) situé plus haut ou plus bas, d'une faible distance (dN), que le niveau que l'on a sur le groupe formant ressort pneumatique correspondant, chaque fois sur l'autre côté de véhicule.

2. Groupe d'essieu selon la revendication 1, caractérisé en ce que l'unité de commande (16) met en service ou maintient en service le compresseur (12), uniquement lorsque la liaison à un groupe formant ressort pneumatique (5, 6) est ouverte.

3. Groupe d'essieu selon la revendication 1 ou 2, caractérisé en ce que les supports de roue associés aux deux côtés du véhicule sont reliés ensemble par l'intermédiaire d'un essieu rigide (4) ou d'un accouplement analogue à un essieu rigide.

4. Groupe d'essieu selon l'une quelconque des revendications 1 à 3, caractérisé en ce que les groupes formant ressorts pneumatiques (5, 6) ou les groupes formant ressorts pouvant être commandés sont disposés à une grande distance des supports de roue, dans la direction transversale du véhicule.

5. Groupe d'essieu selon l'une quelconque des revendications 1 à 4, caractérisé par un stabilisateur (7) associé au groupe d'essieu et/ou par une combinaison avec un autre groupe d'essieu ou un autre agencement d'essieu correspondant, présentant un stabilisateur (2).

6. Groupe d'essieu selon l'une quelconque des revendications 1 à 5, caractérisé en ce qu'à l'unité de commande (16) sont associés des capteurs d'ordre ou de valeur de consigne (19), actionnables manuellement.

7. Groupe d'essieu selon l'une quelconque des - revendications 1 à 6, caractérisé en ce que, dans le cas d'un relevage de niveau, en particulier lorsque le véhicule est à l'arrêt, lors de l'atteinte d'un niveau (N₅) souhaité, au moins le groupe formant ressort pneumatique (5, 6) ayant été alimenté en air comprimé le dernier est brièvement relié à l'atmosphère.

8. Groupe d'essieu selon l'une quelconque des revendications 1 à 7, caractérisé en ce que, lors d'un abaissement de niveau, en particulier à l'arrêt, peu avant l'atteinte d'un niveau (N₅) souhaité, le groupe formant ressort pneumatique (5, 6) respectif n'est relié à l'atmosphère que par impulsions - par une ouverture et une fermeture alternées d'une soupape d'isolement (9, 10).

9. Groupe d'essieu selon l'une quelconque des revendications 1 à 8, caractérisé en ce que, lorsque le véhicule est en roulage, une augmentation et une diminution de niveau soumises à une commande temporelle sont effectuées, en desaérant et/ou en aérant un groupe formant ressort pneumatique (5, 6), pendant un intervalle de temps prédéterminé (5 secondes), puis en vérifiant si le niveau chaque fois atteint est situé dans les limites d'une plage de tolérances, et en ce que d'autres corrections, à commande temporelle, sont, le cas échéant, effectuées ensuite.

10. Groupe d'essieu selon l'une quelconque des revendications 1 à 9, caractérisé en ce que, lorsque le véhicule est en roulage, en particulier lorsque le véhicule est en démarrage, une rapide modification de niveau est effectuée si l'écart par rapport au niveau souhaité est grand et si des écarts de niveau de même sens se présentent sur les deux côtés de véhicule.
